Europäisches Patentamt

European Patent Office

Office européen des brevets

(11) Veröffentlichungsnummer: **0 249 171 B1**

(12) **EUROPÄISCHE PATENTSCHRIFT**

(45) Veröffentlichungstag der Patentschrift: 04.09.91

(51) Int. Cl.⁵: **B25J 11/00**

(21) Anmeldenummer: 87108208.7

(22) Anmeldetag: 05.06.87

(54) **Verfahren zur Programmsteuerung insbesondere eines Industrieroboters für die selbsttätige Beschichtung von Werkstücken.**

(30) Priorität: 10.06.86 DE 3619429

(43) Veröffentlichungstag der Anmeldung:
16.12.87 Patentblatt 87/51

(45) Bekanntmachung des Hinweises auf die
Patenterteilung:
04.09.91 Patentblatt 91/36

(84) Benannte Vertragsstaaten:
BE DE ES FR GB IT NL SE

(56) Entgegenhaltungen:
DD-A- 218 000
DE-A- 3 232 669
GB-A- 2 098 577
GB-A- 2 171 222

(73) Patentinhaber: **Behr Industrieanlagen GmbH & Co.**
**Rosenstrasse 39**
**W-7120 Bietigheim-Bissingen(DE)**

(72) Erfinder: **Schweiker, Werner**
**Haldenstrasse 12 B**
**CH-2540 Grenchen(CH)**
Erfinder: **Leininger, Volker**
**Schalensteinweg 9 A**
**CH-2540 Grenchen(CH)**

(74) Vertreter: **Heusler, Wolfgang, Dipl.-Ing. et al**
**Dr. Dieter von Bezold Dipl.-Ing. Peter Schütz**
**Dipl.-Ing. Wolfgang Heusler Brienner Strasse 52**
**W-8000 München 2(DE)**

## Beschreibung

Die Erfindung betrifft ein Verfahren gemäß dem Oberbegriff des Anspruchs 1.

Beim Programmieren eines Lackierroboters etwa für die Beschichtung von Fahrzeugkarossen muß bekanntlich nicht nur das Bewegungsprogramm erzeugt werden, mit dem später die von der Beschichtungsvorrichtung (Spritzpistole) auszuführende Bewegungsbahn relativ zu der Karosse gesteuert wird, sondern es müssen auch die sich für eine Vielzahl von einzelnen ausgewählten Prozeßparameteränderungspunkten, die bahnbezogen sind, ergebenden Beschichtungsparameter zur späteren automatischen Steuerung der Spritzpistole wie Farbmenge sowie Zerstäuberluft und Hörnerluft, die die Stärke bzw. Form des Sprühstrahls bestimmen, gespeichert werden. Dies geschieht von Hand gewöhnlich mit Hilfe einer "Teach-in"-Tastatur (vgl. H.J. Warnecke/R.D.Schraft "Industrieroboter", 2.Auflage 1979, S.33-36).

Aus der DD-A-218 000 ist es zur Programmsteuerung von Lackierrobotern bekannt, in den Festwertspeicher eines Mikroprozessors das Steuerprogramm und mehrere, wahlweise abrufbare Konturprogramme zu schreiben, die dazu dienen, die Befehle für die Bewegung und den Arbeitszustand der Spritzpistole zu erzeugen. Hierbei werden aus der Lage des Spritzobjektes gewonnene Signale ausgewertet, um die Abarbeitung der Konturprogramme in beliebiger Genauigkeit mit der aktuellen Lage des Spritzobjektes in Übereinstimmung zu bringen, wobei einigen Ein- und Ausgängen eines Eingabe-/Ausgabe-Bauteils ohne Umprogrammierung des Bausteins Doppelfunktionen zugewiesen werden.

Die Programmierung ist wegen der großen Zahl erforderlicher, z.T. auch voneinander abhängiger Parameter mühsam und zeitraubend.

Besondere Probleme ergeben sich, wenn das Programm nachträglich geändert werden soll, weil z.B. einzelne Stellen der Karosse noch nicht optimal beschichtet werden. Wegen der Vielzahl ausgewählter Farbauftreffpunkte ist es sehr schwierig, in dem gespeicherten Programm die zu einer bestimmten Stelle der Karosse gehörenden Daten zu finden, und umgekehrt. Bisher hatte der Programmierer keine Möglichkeit, den gespeicherten Parametern die zugehörigen tatsächlichen Prozeßparameteränderungspunkte an der Karosse zuzuordnen. Der Programmierer mußte deshalb bisher schrittweise dem Programm folgend erneut die Spritzpistole an der Karosse entlangbewegen, wenn das gespeicherte Programm geändert werden sollte.

Aus der Notwendigkeit, nicht nur die Roboterbewegung , sondern auch zusätzliche Parameter wie Hörner- und Zerstäuberluft sowie die Farbmenge steuern zu müssen, ergeben sich bei den bekannten Verfahren noch andere Nachteile. Bekannt war bisher , für eine gleichmässige Beschichtung unterschiedlich gestalteter Details einer Karosse entweder den Roboter mit konstanter Geschwindigkeit zu bewegen und die Farbmenge und sonstigen Parameter zu steuern oder stattdessen nur die Robotergeschwindigkeit zu ändern. Bei der letztgenannten Methode werden sehr große Geschwindigkeitsanforderungen an den Roboter gestellt. Wenn man gleichmäßige Schichtstärken an allen Details der Karosse erhalten will, sind an bestimmten Stellen Geschwindigkeiten von mehr als 1,5 m/sec erforderlich. Bedingt durch Verzögerungen in den Beschleunigungsphasen und durch die Beschränkung der heute für die Lackierung verfügbaren Robotersysteme auf eine Bahngeschwindigkeit von maximal 1,5 m/sec ist eine Programmierung und Optimierung sehr zeitaufwendig. Zwar ist eine gewisse Anpassung durch Änderung des Abstands der Sprühvorrichtung vom zu beschichtenden Teil möglich, ohne die Gefahr erheblicher Strukturunterschiede der Lackoberfläche aber nur in begrenztem Maße. Auch müssen für die Beschichtung derselben Objekte mit unterschiedlichen Farbmaterialien für jedes Material entsprechende Bewegungsänderungen der Roboterbahn durchgeführt werden. Für gleiche Objekte, die mit verschiedenen Farben beschichtet werden sollen, mußten also bisher unterschiedliche Bewegungsprogramme erstellt werden, was einen erheblichen Programmieraufwand erfordert.

Der Erfindung liegt die Aufgabe zugrunde, ein Verfahren zu schaffen, das ein schnelleres und einfacheres Programmieren als bisher und insbesondere einfachere nachträgliche Änderungen der Programme ermöglicht.

Diese Aufgabe wird durch das im Anspruch 1 gekennzeichnete Verfahren gelöst.

Da beim Erstellen des Bewegungsprogramms für jeden Farbauftreffpunkt, an dem Prozeßparameteränderungen vorgenommen werden, eine eigene Adresse erzeugt wird, können aufgrund der Erfindung bei Trennung des Bewegungsprogramms von den Beschichtungsparameterdaten letztere über die im Bewegungsprogramm enthaltenen Adressen aufgerufen werden, wodurch sich eine eindeutige Zuordnung zwischen jedem Prozeßparameteränderungspunkt der Bewegungsbahn, den entsprechenden Punkten am Werkstück selbst und den zugehörigen Beschichtungsparametern ergibt. Für jeden Prozeßparameteränderungspunkt des zu beschichtenden Werkstücks ist schnell und problemlos die Position des Roboters bestimmbar und die zugehörige Gruppe (Zeile) gespeicherter Beschichtungsparameter auffindbar. Ebenso weiß die Bedienungsperson des Systems stets genau, wo sich ein bestimmter Punkt des gespeicherten Programms am realen Werkstück befindet, was bisher nicht ohne weiteres der Fall war. Besonders einfach und bequem können die Daten mit Hilfe einer graphischen Darstellung des zu beschichtenden Gegenstands und Ansteuerung des jeweils gewünschten Punktes auf einem Sichtgerät aufgerufen und bei Bedarf geändert werden. Von Vorteil ist auch die Möglichkeit, die Daten im laufenden Betrieb des Roboters ohne Beeinflußung der Bewegungsbahn ändern zu können.

Die Erfindung eignet sich nicht nur für "Roboter" im üblichen Sinn, sondern grundsätzlich für jede programmsteuerbare, insbesondere mehrachsige Bewegungsvorrichtung, bei der Probleme der eingangs erläuterten Art auftreten können. Das hier beschriebene Programmsteuerverfahren kann in allen wesentlichen Schritten mit Hilfe eines handelsüblichen Rechnersystems ausgeführt werden.

Am bevorzugten Beispiel eines Lackierroboters für Fahrzeugkarossen wird die Erfindung näher erläutert. In der Zeichnung zeigen:

Fig. 1   eine schematische Darstellung der zu erzeugenden Datei für die Beschichtungsparameter ; und

Fig. 2   die graphische Darstellung der Karosse auf einem Sichtgerät.

Zum Programmieren des Roboters wird nach an sich bekannter Teach-in-Methode , die hier nicht beschrieben werden muß, das Bewegungsprogramm für den von ihm zu bearbeitenden Teil der Karosse (z.B. Regenrinne oder Kotflügel usw.) erstellt, wobei auch die für die einzelnen "geteachten" Punkte erforderlichen Beschichtungsparameter gespeichert werden. Erfindungsgemäß wird jedoch für jeden Prozeßparameteränderungspunkt im Bewegungsprogramm eine Adresse definiert, die mit den zugehörigen Parameterdaten ausgegeben wird. Es können beispielsweise 255 verschiedene Punkte vorgesehen sein.

Vorzugsweise werden beim Erzeugen des Bewegungsprogramms sowohl die Geschwindigkeit der Beschichtungsvorrichtung als auch die Farbmenge und sonstigen Beschichtungsparameter variiert. Dadurch werden die eingangs erwähnten Nachteile der bisher üblichen Methode vermieden, den Roboter mit unterschiedlichen Geschwindigkeiten zu bewegen, die Beschichtungsparameter jedoch unverändert zu lassen. Bei bestimmten Details der Karosse kann es zweckmässig sein, die Beschichtungsvorrichtung geradlinig über unterschiedlich weit von ihr entfernte Farbauftreffpunkte zu bewegen und eine gleichmäßige Beschichtung der Fläche durch entsprechend unterschiedliche Beschichtungsparameter zu steuern.

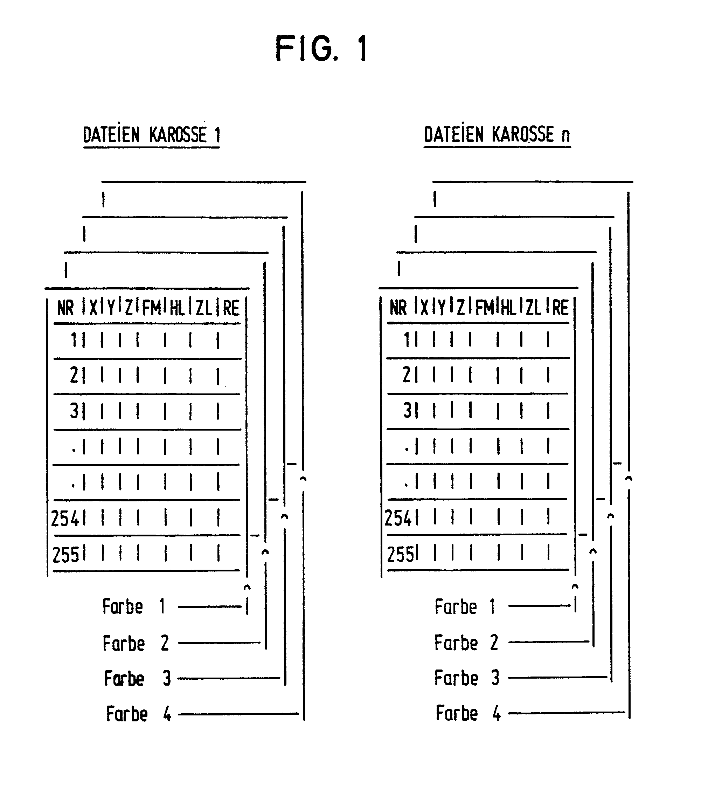

Aufgrund der im Bewegungsprogramm definierten Prozeßparameteränderungen wird nun (während oder nach dessen Erstellung) eine Datei mit der in Figur 1 schematisch dargestellten Struktur erzeugt. Demgemäß ist für jede von beispielsweise vier Farben, mit denen eine bestimmte Karosse gegebener Gestalt beschichtet werden kann, je eine Tabelle erforderlich. Deren den erwähnten 255 Punkten zugeordnete Zeilen enthalten in codierter Form jeweils die im Bewegungsprogramm definierte Adresse NR, die die Lage der Sprühvorrichtung bezüglich der Karosse definierenden Raumkoordinaten X, Y,Z sowie Steuerinformationen FM für die Farbmenge, HL für die Hörnerluft, ZL für die Zerstäuberluft und RE für ggf. erforderliche sonstige Steuerfunktionen. Die Anzahl der Einzelparameter kann bei Bedarf beliebig erweitert werden. Jede Zeile entspricht also einem speziell an das jeweils zu lackierende Detail angepassten Sprühstrahl.

Nach Fertigstellung der ersten Tabelle für eine erste Farbe einer gegebenen ersten Karosse werden entsprechende Tabellen mit den für die übrigen Farben zu ändernden Parametern sowie entsprechenden Tabellen für die gegebene Anzahl n anders geformter Karossen erzeugt. Für einen Karosseriebereich gegebener Form sind zwar unterschiedliche Tabellen für die verschiedenen Farben erforderlich, aber keine unterschiedlichen Bewegungsprogramme. Für die zum Beschichten anderer Karosseriebereiche (Türen, Motorraum, usw.) erstellten Bewegungsprogramme gilt Entsprechendes; für jeden Karosseriebereich wird ein eigener Datei-Modul zusammengestellt, der durch Adressierung aufgerufen werden kann.

Beispielsweise können die den Zeilennummern 1 bis 255 entsprechenden Adressen NR aus 8 Bit und die Beschichtungsparameter, mit denen z.B. die Ventile einer üblichen Sprühvorrichtung gesteuert werden, aus jeweils 16 Bit bestehen.

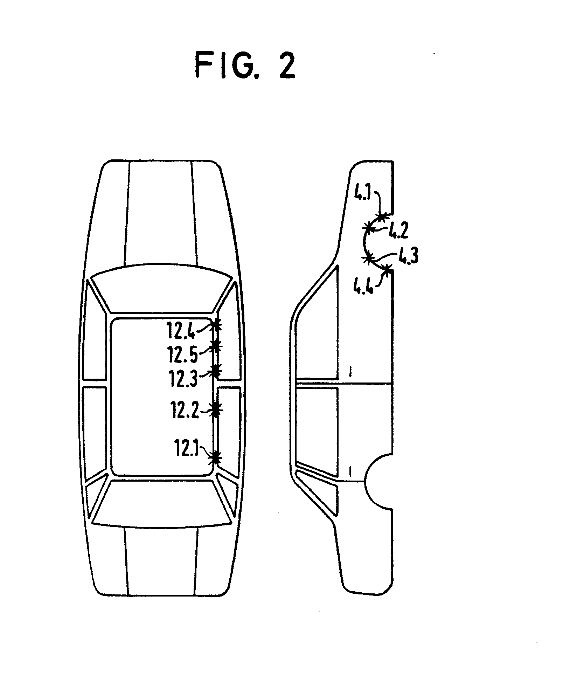

Bei bisher bekannten Verfahren mußte zum Wiederfinden eines "geteachten" Prozeßparameteränderungspunktes an der Karosse zunächst das Bewegungsprogramm bis zu diesem Punkt gefahren werden. Im Gegensatz hierzu bereitet es erfindungsgemäß keine Schwierigkeiten, die Beschichtungsparameter entsprechend zu ändern, wenn im Betrieb festgestellt wird, daß einebestimmte Stelle der Karosse nicht optimal beschichtet wird, da die betreffenden Parameter im gespeicherten Programm aufgrund der eindeutigen Zuordnung sehr schnell und einfach aufgefunden werden können. Besonders zweckmäßig ist es hierfür, die Gestalt der zu beschichtenden Karosse gemäß Fig. 2 graphisch auf dem Sichtgerät des Rechnersystems darzustellen und die beim Teach-in des Bewegungsprogramms gewählten Prozeßparameteränderungspunkte in dieser Darstellung sichtbar zu markieren. Zusätzlich werden an die Markierungspunkte identifizierende Informationen geschrieben, wie z.B. Ziffern, Buchstaben und/oder sonstige Symbole. Bei dem dargestellten Beispiel sind die Punkte 12.1 bis 12.5 der rechten Regenrinne und die Punkte 4.1 bis 4.4 eines Kotflügels markiert worden.

Die graphische Darstellung der Karosse und das Aufrufen der Parameterdaten erfolgen zweckmässig auf demselben Sichtgerät wobei die Karosse und Tabelle nebeneinander oder unter Umständen auch nacheinander dargestellt werden können.

Wenn nun die Beschichtungsparameter ab einem bestimmten Farbauftreffpunkt geändert werden sollen, wird über die graphische Darstellung der Karosse der Teil der Tabelle der Parameterdatei mit der zu diesem Punkt gehörenden Zeile aufgerufen, was in an sich bekannter Weise durch Ansteuern des Markierpunktes mit einem Lichtgriffel oder dem Cursor des Sichtgeräts und die dadurch in an sich bekannter Weise bewirkte Adressierung der gespeicherten Daten geschehen kann. In der aufgerufenen Zeile werden dann die gewünschten Änderungen vorgenommen.

Auch Ergänzungen sind ohne weiteres möglich, durch vorherige Definierung eines Prozeßparameteränderungspunktes im Bewegungsprogramm, anschließendes Aufrufen der entsprechenden Tabelle und Einschreiben der zu dem neuen Punkt gehörenden Daten in eine zusätzliche Zeile, die an der erforderlichen Stelle eingefügt wird. Ebenso einfach können nicht mehr gewünschte Punkte im Bewegungsprogramm und an der Karossengraphik gelöscht werden; die zugehörigen Daten in der zu diesem Zweck aufgerufenen Tabelle können ebenfalls gelöscht oder vom Aufruf gesperrt werden.

Die neuen, geänderten Daten werden vom Steuersystem der Beschichtungsvorrichtung übernommen, sobald die betreffende Zeile wieder während des Ablaufs des Bewegungsprogramms aufgerufen wird.

Nach Ablauf des Bewegungsprogramms wird durch eine Prüfroutine festgestellt, ob alle Punkte der Tabelle aufgerufen wurden, und ein eventueller Fehler gemeldet. Eine Fehlermeldung kann auch dann erfolgen, wenn vom Bewegungsprogramm ein Prozeßparameteränderungspunkt aufgerufen wird, der in der zugehörigen Datei nicht definiert ist.

Beim Ablauf des Programms werden die gelesenen Steuerbefehle zum Einstellen der Farbmenge und der Luftmenge usw. vom Robotersteuersystem an ein Parametersteuersystem abgegeben, das seinerseits die Regler für die betreffenden Parameter steuert. Eine weitere Verbesserung der Programmsteuerung läßt sich erreichen, wenn man hierbei die unterschiedlichen Vorhaltzeiten für z.B. durch Ventile unterschiedlich schnell änderbare Beschichtungsparameter berücksichtigt. Insbesondere sprechen die zur Zeit verwendeten Farbmengenregler bei einer Beschichtungsvorrichtung für Karossen schneller auf einen Änderungsbefehl an als die zur Zeit verwendeten Luftmengenregler .

Würde man die gelesenen Steuerbefehle für Farbmenge und Luftmenge gleichzeitig an die betreffenden Regler abgeben, könnten sich zunächst falsche Sprühbedingungen ergeben, weil für die eingestellte Farbmenge noch nicht sofort die richtigen Luftwerte erreicht werden. Entsprechendes kann für andere Parameter gelten. Aus diesem Grund werden erfindungsgemäß beim Ablauf des Steuerprogramms vom Robotersteuersystem stets mindestens zwei verschiedene Übergabesignale erzeugt. Das eine Signal, das die Einstellung des schneller änderbaren Parameters (Farbmenge) steuert, wird beim Durchfahren der Bewegungsbahn des Roboters zeitlich später an das Parametersteuersystem abgegeben als das andere Signal, und/oder das Parametersteuersystem übergibt den Steuerbefehl schneller, d.h. zeitlich früher an den zugehörigen (Luftmengen-)Regler. Das Ergebnis ist in jedem Fall eine gleichzeitige Einstellung oder Änderung der Beschichtungsparameter. Durch die verschiedenen Übergabesignale wird die Charakteristik des Regelkreises der betreffenden Parameter optimiert.

## Patentansprüche

1. Verfahren zur Programmsteuerung einer programmierbaren mehrachsigen Bewegungsvorrichtung, insbesondere eines Industrieroboters, für die selbsttätige Beschichtung von Werkstücken, insbesondere von Fahrzeugkarossen, bei dem zunächst ein Musterwerkstück durch manuelle Steuerung der Bewegungsvorrichtung und ihrer Beschichtungsvorrichtung beschichtet wird, wobei unter Speicherung der Ortsparameter der Beschichtungsvorrichtung für ausgewählte Farbauftreffpunkte ein Bewegungsprogramm für die Bewegungsvorrichtung erzeugt wird und für jeden ausgewählten Farbauftreffpunkt, an dem die erforderliche Farbmenge und/oder sonstige Beschichtungsparameter geändert werden, Informationen über die erforderlichen Beschichtungsparameter gespeichert werden, bei dem die Bewegungsvorrichtung dann zur selbsttätigen Beschichtung durch das Bewegungsprogramm und die gespeicherten Beschichtungsparameter gesteuert wird, und bei dem die gespeicherten Parameter zur Kontrolle oder Änderung tabellarisch dargestellt werden, **dadurch gekennzeichnet,** daß beim Erstellen des Bewegungsprogramms für jeden gewählten Farbauftreffpunkt, an dem Prozeßparameteränderungen vorgenommen werden, eine eigene Adresse erzeugt wird, und daß aufgrund des Bewegungsprogramms eine gesonderte Parameterdatei erzeugt wird, in der den Adressen der jeweiligen Farbauftreffpunkte jeweils die für den betreffenden Punkt erforderlichen Beschichtungsparameter zugeordnet werden, so daß die Beschichtungsparameterdaten über die im Bewegungsprogramm enthaltenen Adressen aufgerufen werden können.

2. Verfahren nach Anspruch 1, **dadurch gekennzeichnet,** daß für jedes zu verarbeitende Farbmaterial eine eigene Datei erzeugt wird, während bei einer gegebenen geometrischen Form des zu beschichtenden Teils des Werkstücks für alle Farbmaterialien dasselbe Bewegungsprogramm verwendet wird.

3. Verfahren nach Anspruch 1 oder 2, **dadurch gekennzeichnet,** daß in der Parameterdatei den Beschichtungsparametern auch die Raumkoordinaten (X,Y,Z) der Bewegungsvorrichtung für die einzelnen Punkt zugeordnet werden.

4. Verfahren nach einem der vorangehenden Ansprüche, **dadurch gekennzeichnet,** daß die Gestalt des zu beschichtenden Werkstücks auf einem Sichtgerät dargestellt wird,

und daß beim Erzeugen des Bewegungsprogramms die ausgewählten Farbauftreffpunkte an dem auf dem Sichtgerät dargestellten Werkstück sichtbar markiert werden.

5. Verfahren nach Anspruch 4, **dadurch gekennzeichnet,** daß zur Kontrolle oder Änderung der Beschichtungsparameter jeweils die einem markierten Punkt zugeordneten Parameter tabellarisch gemeinsam mit einer den betreffenden Punkt identifizierenden Information auf dem Sichtgerät dargestellt werden.

6. Verfahren nach Anspruch 4 oder 5, **dadurch gekennzeichnet,** daß durch Ansteuern eines der markierten Punkte an dem dargestellten Werkstück selbsttätig die zu diesem Punkt gehörenden Beschichtungsparameter aufgerufen und dargestellt werden.

7. Verfahren nach einem der Ansprüche 4 bis 6, **dadurch gekennzeichnet,** daß sowohl in die darstellbare Tabelle als auch an die markierten Punkte in der bildlichen Darstellung des Werkstücks Zahlen oder sonstige Informationen geschrieben werden, welche die einzelnen Farbauftreffpunkte identifizieren.

8. Verfahren nach einem der vorangehenden Ansprüche, **dadurch gekennzeichnet,** daß beim Erzeugen des Bewegungsprogramms die Beschichtungsvorrichtung mit variierender Geschwindigkeit bewegt wird und die Farbmenge sowie die sonstigen Beschichtungsparameter ebenfalls unterschiedlich gewählt werden.

9. Verfahren nach Anspruch 8, **dadurch gekennzeichnet,** daß die Beschichtungsvorrichtung bahngesteuert mit bahnabhängig unterschiedlichem Abstand zum Farbauftreffpunkt auf dem Werkstück bewegt und eine definierte Beschichtung der durch die Bahn vorgegebenen Teilfläche des Werkstücks durch entsprechend unterschiedliche Beschichtungsparameter appliziert wird.

10. Verfahren nach dem Oberbegriff des Anspruchs 1, **dadurch gekennzeichnet,** daß bei Ausführung des Steuerprogramms mindestens zwei verschiedene Übergabesteuersignale für schneller bzw. langsamer änderbare Beschichtungsparameter erzeugt werden, und daß das die Einstellung der Parameter steuernde System aus dem Programm gelesene Steuerbefehle zum Einstellen der langsamer änderbaren Parameter zeitlich früher empfängt und/oder schneller an den zugehörigen Regler übergibt als die anderen Steuerbefehle, so daß die Wirkung der unterschiedlichen Beschichtungsparameter zeitlich zusammenfällt.

## Claims

1. Program control method for a programmable, multi-axis movement apparatus, particularly an industrial robot, for the automatic coating of workpieces, particularly of vehicle bodies, in which a specimen workpiece is initially coated by manual control of the movement apparatus and its coating apparatus whereby a movement program for the movement apparatus is produced whilst storing the locational parameters of the coating apparatus for selected paint impact points and for each selected paint impact point, at which the necessary paint quantity and/or other coating parameters are changed, information relating to the necessary coating parameters is stored, in which the movement apparatus is then controlled for automatic coating by the movement program and the stored coating parameters and in which the stored parameters are displayed in the manner of a table for the purpose of monitoring or alteration, characterised in that when producing the movement program an individual address is produced for each selected paint impact point at which process parameter changes are effected and that on the basis of the movement program a separate parameter data file is produced in which the coating parameters necessary for each point are associated with the addresses of the respective paint impact points so that the coating parameter data relating to the addresses contained in the movement program can be called up.

2. Method as claimed in claim 1, characterised in that for each paint material to be processed an individual data file is produced whilst with a given geometrical shape of the portion to be coated of the workpiece the same movement program is used for all paint materials.

3. Method as claimed in claim 1 or 2, characterised in that the spatial coordinates (X,Y,Z) of the movement apparatus for the individual point are associated with the coating parameters in the parameter data file.

4. Method as claimed in one of the preceding claims, characterised in that the shape of the workpiece to be coated is displayed on a screen and that when producing the movement program the selected paint impact points are visibly marked on the workpiece displayed on the screen.

5. Method as claimed in claim 4, characterised in that for the purpose of monitoring or changing the coating parameters, the parameters associated with one marked point are displayed in the manner of a table together with information identifying the point in question on the screen.

6. Method as claimed in claim 4 or 5, characterised in that by indicating one of the marked points on the displayed workpiece the coating parameters associated with this point are automatically called up and displayed.

7. Method as claimed in one of claims 4 to 6, characterised in that numbers or other information, which identify the individual paint impact points, are written both in the displayable table and also at the marked points in the visual display of the workpiece.

8. Method as claimed in one of the preceding claims, characterised in that the coating apparatus is moved with varying velocity when producing the movement program and the paint quantity as well as the other coating parameters are also selected to be variable.

9. Method as claimed in claim 8, characterised in that the coating apparatus is moved over the workpiece in a controlled path and with a differing distance from the paint impact point which varies along the path and a defined coating of the part of the surface of the workpiece predetermined by the path is applied by correspondingly varying coating parameters.

10. Method as claimed in the precharacterising portion of claim 1, characterised in that when executing the control program at least two different transfer signals for more rapidly or more slowly changeable coating parameters are produced and that the system controlling the adjustment of the parameters receives control commands read from the program for adjusting the more slowly changeable parameter earlier and/or transmits them more rapidly to the associated controller than the other control commands so that the action of the differing coating parameters occurs at the same time.

**Revendications**

1. Procédé de commande programmée d'un dispositif de déplacement multi-axes programmable, en particulier d'un robot industriel, pour le revêtement automatique de pièces usinées en particulier de carrosseries de véhicule, dans lequel d'abord une pièce-modèle est revêtue par commande manuelle du dispositif de déplacement et de son dispositif de revêtement, un programme étant généré en mettant me mémoire les paramètres spatiaux du dispositif de revêtement pour donner des points d'application de peinture sélectionnés, et pour chaque point d'application de peinture sélectionné, auquel la quantité de peinture nécessaire et/ou d'autres paramètres de revêtement sont modifiés, des informations concernant les paramètres de revêtement nécessaires sont mis en mémoire, procédé dans lequel le dispositif de déplacement est ensuite commandé, en vue d'effectuer une application automatique de revêtement, par le programme de déplacement et par les paramètres de revêtements mis en mémoire, et dans lequel les paramètres mis en mémoire sont présentés sous forme de tábles en vue de procéder au contrôle ou à une modification caractérisé en ce que lors de l'élaboration du programme de déplacement pour chaque point d'application de peinture, pour lequel sont entreprises des modifications des paramètres de processus, il est produit une adresse propre, et, sur la base du programme de déplacement, il est produit une donnée paramétrique spéciale, dans laquelle des paramètres de revêtement nécessaires au point concerné sont chaque fois associés aux adresses des points d'application de peinture respectifs, de sorte que les données paramétriques de revêtement peuvent être appelées par l'intermédiaire des adresses contenues dans le programme de déplacement.

2. Procédé selon la revendication 1, caractérisé en ce qu'une donnée propre est produite pour chaque matériau de peinture à traiter, tandis que pour une forme géométrique donnée de la partie de la pièce à recouvrir, le même programme de déplacement est utilisé pour tous les matériaux de peinture.

3. Procédé selon la revendication 1 ou 2, caractérisé en ce que, dans la donnée paramétrique, on associe aux paramètres de revêtement également les coordonnées spatiales (X,Y,Z) du dispositif de déplacement pour le point en question.

4. Procédé selon l'une des revendications précédentes, caractérisé en ce que la forme de la pièce à revêtir est représentée sur un appareil de visualisation et que pour générer le programme de déplacement, on marque de façon visible les points d'application de peinture sélectionnés sur la pièce usinée, représentée sur l'appareil de visualisation.

5. Procédé selon la revendication 4, caractérisé en ce qu'en vue du contrôle des paramètres de revêtement, sur l'appareil de visualisation, on présente chaque fois globalement sous forme de tables les paramètres associés à un point marqué, avec une information identifiant le point concerné.

6. Procédé selon la revendication 4 ou 5, caractérisé en ce que pour commander l'un des point marqués sur la pièce représentée, on interroge et l'on représente automatiquement les paramètres de revêtement appartenant à ce point.

7. Procédé selon l'une des revendications 4 à 6, caractérisé en ce que, tant dans les tables représentables qu'également sur les points marqués dans la représentation visuelle de la pièce, des nombres ou d'autres information sont écrits qui identifient les différents points d'application de peinture.

8. Procédé selon l'une des revendications précédentes, caractérisé en ce que, lors de la génération du programme de déplacement, le dispositif de revêtement est déplacé à vitesse variable et la quantité de peinture ainsi que les autres paramètres de revêtement sont également choisis de façon différenciée.

9. Procédé selon la revendication 8, caractérisé en ce que le dispositif de revêtement est commandé par une trajectoire, avec une distance variable, fonction de la trajectoire, par rapport au point d'application de peinture sur la pièce, et un revêtement défini de la surface partielle, prédéterminée par la trajectoire, de la pièce usinée étant appliqué au moyen de paramètres de revêtement différents correspondants.

10. Procédé selon le préambule de la revendication 1, caractérisé en ce que lors de l'exécution du programme de commande, il y a production d'au moins deux signaux de commande de transfert différents, pour des paramètres de revêtement variables, plus rapide, respectivement plus lents, et que le système commandant le réglage des paramètres reçoit du programme des ordres de commande obtenus par lecture, d'une façon plus précoce pour les paramètres qui sont modifiables plus lentement, et/ou les transmet aux régulateurs correspondants, plus rapidement que les autres ordres, de sorte que l'effet des différents paramètres de revêtements coincide temporellement.

# FIG. 1

DATEIEN KAROSSE 1

| NR | X | Y | Z | FM | HL | ZL | RE |
|-----|---|---|---|----|----|----|----|
| 1 | | | | | | | |
| 2 | | | | | | | |
| 3 | | | | | | | |
| . | | | | | | | |
| . | | | | | | | |
| 254 | | | | | | | |
| 255 | | | | | | | |

Farbe 1 ————
Farbe 2 ————
Farbe 3 ————
Farbe 4 ————

DATEIEN KAROSSE n

| NR | X | Y | Z | FM | HL | ZL | RE |
|-----|---|---|---|----|----|----|----|
| 1 | | | | | | | |
| 2 | | | | | | | |
| 3 | | | | | | | |
| . | | | | | | | |
| . | | | | | | | |
| 254 | | | | | | | |
| 255 | | | | | | | |

Farbe 1 ————
Farbe 2 ————
Farbe 3 ————
Farbe 4 ————

# FIG. 2